# EUROPEAN PATENT APPLICATION

(11) **EP 4 178 017 A1**
(43) Date of publication of application: **10.05.2023**
(21) Application number: 21206141.0
(22) Date of filing: 03.11.2021
(51) Int. Cl.: H01M 50/209, H01M 50/242, H01M 50/249, H01M 50/291

(54) **A BATTERY PACK AND METHOD**

(71) Applicant: Valmet Automotive EV Power Oy, 24100 Salo (FI)
(72) Inventor: Kopra, Lasse, 23200 Vinkkilä (FI)
(74) Representative: Papula Oy

(57) **Abstract**

A battery pack comprising: a housing comprising an interior space; a cell stack disposed within the interior space of the housing. The cell stack, comprising: a plurality of battery cells arranged in the cell stack and forming a cell set; and at least one elastic pad between the plurality of battery cells. The cell stack further comprising a first end spacer and a second end spacer, wherein the first end spacer and the second end spacer are configured to be compressed towards each other to allow compression of the cell set when the cell stack is configured to be inserted into the housing and a spacer system, wherein the spacer system comprising one or more guide members configured to support and stiffen the cell stack when compressed. The housing is configured to limit expansion of the cell stack and withstand swelling forces of the plurality of battery cells.

## Description

### FIELD OF THE INVENTION

Various example embodiments generally relate to a battery pack. Some example embodiments relate to at least partially the battery pack comprising battery cells.

### BACKGROUND OF THE INVENTION

A battery pack contains multiple battery cell stacks and metal frames, which the battery pack protects from external forces. The cell stacks have a certain number of battery cells fixed together and they are structured with the rigid metal frames, which carry the cells stacks and control cell swelling forces. Packing the cells stacks into the battery pack may be however further improved.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. The scope of protection sought for various embodiments of the present disclosure is set out by the independent claims.

Example embodiments of the present disclosure show lighter, more compact, and economic solutions, which simplify the construction of the cell stack leading to cost and time savings. These and other benefits may be achieved by the features of the independent claims. Further advantageous implementation forms are provided in the dependent claims, the description, and the drawings.

According to a first aspect, a battery pack may comprise: a housing comprising a first interior surface and a second interior surface opposite the first interior surface; a cell stack disposed within an interior space of the housing between the first and second interior surfaces, wherein the cell stack comprising: a plurality of battery cells arranged in the cell stack and forming a cell set; at least one elastic pad between the plurality of battery cells; a first end spacer and a second end spacer, wherein the first end spacer and the second end spacer are configured to be compressed towards each other to allow compression of the cell set when the cell stack is configured to be inserted into the housing; and a spacer system configured to support the plurality of battery cells, wherein the spacer system comprising one or more guide members configured to support and stiffen the cell stack when compressed; and wherein the housing is configured to limit expansion of the cell stack and withstand swelling forces of the plurality of battery cells.

According to an example embodiment of the first aspect, an X axis of the cell stack may be extending through the length of the cell stack, a Z axis may be extending through the height of the cell stack, and a Y axis may be extending through a width of the cell stack; and when the cell stack may be compressed to its shortest position, the guide member may be configured to take contact and support the cell stack in X, Y, and Z axis directions.

According to an example embodiment of the first aspect, the first end spacer and the second end spacer may comprise a sliding surface configured to be set against the interior surfaces of the housing when the cell stack may be configured to be inserted into the battery pack.

According to an example embodiment of the first aspect, the spacer system may be configured to acts as an adapter to guide the cell stack when the cell stack may be configured to be inserted into the housing.

According to an example embodiment of the first aspect, an elastic pad may be configured to be located between the first end spacer and a first cell set end; and/or between the second end spacer and a second cell set end.

According to an example embodiment of the first aspect, the spacer system may comprise at least one side spacer or cell spacer.

According to an example embodiment of the first aspect, the spacer system may comprise one or more cell spacers disposed between the plurality of battery cells.

According to an example embodiment of the first aspect, the guide members may be configured to attach or connect the cell spacer to the other cell spacer; and/or to the first or second end spacer.

According to an example embodiment of the first aspect, the cell set further may comprise a bottom cell set side, a first cell set side, and a second cell set side; and the spacer system may comprise one or more side spacers covering at least partly at least one side of the cell set.

According to an example embodiment of the first aspect, the guide members may be configured to connect the side spacers to the first or second end spacer; and/or the other side spacer.

According to an example embodiment of the first aspect, the side spacer may be covering at least partly at least one of the following: the first cell set side, the second cell set side, and/or the bottom cell set side.

According to an example embodiment of the first aspect, the spacer system may comprise a first side spacer and a second side spacer, wherein the first side spacer may be covering at least partly the first cell set side and/or the bottom cell set side; and the second side spacer may be covering at least partly the second cell set side and/or the bottom cell set side.

According to an example embodiment of the first aspect, the one or more side spacers may comprise one or more openings.

According to an example embodiment of the first aspect, the spacer system may comprise one or more elastic stripes facing towards the housing interior surfaces.

According to a second aspect, a method may comprise assembling a battery pack, wherein the battery pack may comprise: a housing comprising a first interior surface and a second interior surface opposite the first interior surface; a cell stack disposed within an interior space of the housing between the first and second interior surfaces, wherein the cell stack, comprising: a plurality of battery cells arranged in the cell stack and forming a cell set; at least one elastic pad between the plurality of battery cells; a first end spacer and a second end spacer, wherein the first end spacer and the second end spacer are configured to be compressed towards each other to allow compression of the cell set when the cell stack is configured to be inserted into the housing; and a spacer system configured to support the plurality of battery cells, wherein the spacer system comprising one or more guide members configured to support and stiffen the cell stack when compressed; and wherein the housing is configured to limit expansion of the cell stack and withstand swelling forces of the plurality of battery cells, wherein the method may comprise: forming the cell stack using the battery cells, first and second end spacers, at least one elastic pad, and spacer system; compressing the cell stack; and inserting the cell stack within the housing of the battery pack.

### BRIEF DESCRIPTION OF THE DRAWINGS

The accompanying drawings, which are included to provide a further understanding of the example embodiments and constitute a part of this specification, illustrate example embodiments and together with the description help to understand the example embodiments. In the drawings:
Fig. 1a illustrates a schematic drawing of a battery pack having one cell stack assembled into the battery pack in which examples of disclosed embodiments may be applied;
Fig. 1b illustrates a perspective view of a cell stack which is ready to be assembled into the battery pack of Fig. 1a and in which examples of disclosed embodiments may be applied;
Fig. 2 illustrates is a perspective view of a battery cell in which examples of disclosed embodiments may be applied;
Fig. 3 illustrates is an exploded perspective view of a cell stack comprising cell spacers in which examples of disclosed embodiments may be applied;
Fig. 4 illustrates an exploded perspective view of a cell stack comprising two side spacers in which examples of disclosed embodiments may be applied;
Fig. 5a illustrates an exploded perspective view of a cell stack comprising one side spacer in which examples of disclosed embodiments may be applied;
Fig. 5b illustrates a perspective view of the cell stack of Fig. 5a comprising one side spacer, wherein part of battery cells has been assembled into the cell stack and in which examples of disclosed embodiments may be applied;
Fig. 6 illustrates an exploded perspective view of a cell stack comprising one side spacer in which examples of disclosed embodiments may be applied;
Fig. 7a illustrates an exploded perspective view of a cell stack comprising one side spacer in which examples of disclosed embodiments may be applied;
Fig. 7b illustrates an exploded perspective view of a cell stack comprising two side spacers in which examples of disclosed embodiments may be applied; and
Fig. 8 illustrates an example of a method for assembling a battery pack, according to an example embodiment.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps or operations for constructing and operating the example. However, the same or equivalent functions and sequences may be accomplished by different examples.

Energy density and optimization of battery system structures is a central issue in electric vehicle development to have lighter, more compact, and economic solutions, which might simplify the construction of a battery pack leading to cost and time savings.

According to an example embodiment, there is provided a cell set together with a spacer system, and end spacers producing the cell stacks which are mounted straight to a battery pack housing without rigid metal frame structures around the cell stacks. The battery pack housing itself may act as a rigid structure of the cell stacks. The cell stack may be lengthwise compressible, and it may be compressed smaller than the battery pack housing interior dimensions. The cell stack ends may comprise end spacers which may slide against the housing. The cell stack may be inserted into the housing slidably. The cell stack compression may be released already before it meets the bottom of the housing and from there the cell stack may then be pressed to its place.

Example embodiments relate to a battery pack comprising a housing, wherein the housing comprising a first interior surface and a second interior surface opposite the first interior surface and a cell stack disposed within an interior space of the housing between the first and second interior surfaces, wherein the housing is configured to limit expansion of the cell stack and withstand swelling forces of the battery cells. More particularly the cell stack may comprise a plurality of battery cells arranged in the cell stack and forming a cell set, at least one elastic pad between the plurality of battery cells, a first end spacer and a second end spacer, wherein the first end spacer and the second end spacer are configured to be compressed towards each other to allow compression of the cell set when the cell stack is configured to be inserted into the housing, and a spacer system configured to support the plurality of battery cells, wherein the spacer system comprising one or more guide members configured to support and stiffen the cell stack when compressed.

According to an example embodiment, a battery pack is a complete set of battery cells of a device, such as an industrial apparatus, or a vehicle. The battery pack may further comprise other necessary elements to operate the battery cells of the device. The battery pack may comprise a housing wherein one or more cell stacks may be inserted. The housing may comprise an interior space, wherein the cell stack may be disposed within the interior space of the housing. The interior space may comprise first interior surface, a second interior surface opposite the first interior surface, a third interior surface, and a fourth interior surface opposite the third interior surface. At least one cell stack may be disposed within an interior space of the housing between the first and second interior surfaces. The housing is for example, a rigid die cast housing or welded structure. The housing may comprise one or more partition walls between the cell stacks. The partition walls may be lower than other walls of the housing. The partition walls may further be configured to receive swelling forces of the battery cells. Housing material may be based on at least one of the following: steel, aluminum alloy, polymer like plastic or cellulose, or composite material comprising, but not limited to glass, adhesive, carbon fiber, graphite, wood, and/or aramid fiber. The housing may control cell stack dimensions and battery cell internal swelling forces during the lifetime, support the cell stack from ends and sides, protect the battery cells from external forces, and also improve the resistance against twisting, torsion and/or heavy impacts. Thus, the housing also may act as a rigid structure of the cell stacks and there may be no need for a separate rigid battery cell stack frame structure around the cell stack.

The cell stack may comprise a plurality of battery cells arranged in the cell stack and forming a cell set. The battery cells are for example, re-chargeable lithium-ion (li-ion) battery cells. The battery cells may all have the same shape, electrochemistry, and dimensions. The shape of the battery cells may be prismatic, pouch, or similarly shaped battery cells. A housing of the battery cell may be made of metal having good thermal conductivity.

The battery cell may comprise six substantially flat faces each at a right angle to the neighboring faces. Two of the faces, termed side faces may be larger than the rest of the faces. One of the smaller faces, top face may comprise the battery cell terminals, through which the battery cell may be recharged and discharged. The face opposite and parallel to the top face may be termed a bottom face. The bottom face may be positioned towards a base portion of the housing. The bottom face may comprise glue, tape or other attachment means for fastening the battery cell to the battery pack housing. Alternatively, the attachment means may be placed on the housing before inserting the cell stack. The properties of the attachment means preferably allow efficient heat transfer between the bottom face of the battery cell and the housing of the battery pack. The two remaining faces may be termed end faces.

According to an example embodiment, the battery cell comprise at least one battery cell terminal. The at least one battery cell terminal may be located on the top face and/or on bottom face of the battery cell. The battery cell may be a pouch cell.

According to an example embodiment, the battery pack is used upside down. This means that the housing of the battery pack may be turned so that the bottom of the housing is facing upwards. This example may cover a concept where the battery cell terminals may be located at the ends of the battery cells. Thus, the at least one battery cell terminal may be located on the top and bottom face of the battery cell or on the bottom face of the battery cell. After the installation of the battery cells into the housing it may be turned over, i.e. the battery pack housing is upside down when it is used. This may be possible because the at least one battery cell terminal may be on the bottom face of the battery cell.

The cell stack may further comprise one or more soft elastic pads between the battery cells. The elastic pads may be used between each battery cell of the cell stack and between the cell set and end spacers to separate the battery cells from each other and/or the end spacers. The elastic pads are for example, a soft foam pads made of polyurethane (PU) or polyethylene (PE). The elastic pads may provide cell swelling space between the battery cells during lifetime, which may be required by most of the li-ion batteries because they may tend to swell with age. They may also make the cell stacks compressible and allow space for tolerance management when assembling the cell stacks into the housing. The elastic pads may cover at least partly at least one surface of the battery cell, preferably it may cover at least partly the surface between the two adjacent battery cells, thus two adjacent side faces of the battery cells. The elastic pads may have at least one at least partly adhesive surface to adhere the elastic pad to the battery cell surface and/or the battery cells to one another with the help of the elastic pads.

The cell stack may further comprise a first end spacer and a second end spacer, wherein the first end spacer may be disposed to the first cell set end and the second end spacer may be disposed to the second cell set end. The end spacers are made for example, from plastic, plastic composite with glass reinforcement, or other non-conductive material like cellulose composite. The upper part of the end spacer may extend beyond the top face of the battery cell. The upper part of the end spacer may comprise at least one protrusion or fin that extend beyond the top face of the battery cell. Thus, the upper parts of the end spacers may allow and help compression of the end spacers and the whole cell stack to allow it to be mounted into the battery pack. The cell set may be located between the first end spacer and the second end spacer when they are compressed. The upper parts of the end spacers may however not extend higher than the housing interior when the cell stack has been installed into the housing. This means that the cell stack may be first compressed from the end spacers to install it partly or halfway into the housing and then the cell stack may be pressed down from a cell stack top part into the bottom of the housing.

According to an example embodiment, the first end spacer comprises a sliding surface configured to be set against or facing the first interior surface of the housing, and the second end spacer comprise a sliding surface configured to be set against the second interior surface of the housing to let the sliding surface to slide against the housing interior surface. When the cell stack is configured to be inserted into the battery pack, the cell stack compression by for example, a compression tool may be released already before it meets the bottom of the housing. From there the cell stack may be pressed into the bottom of the housing for example, with the compression tool or another tool. Thus, the sliding surfaces may help to slide the cell set downwards and make inserting of the cell stack much easier.

According to an example embodiment, the cell stack may comprise at least one elastic pad, wherein the elastic pad is configured to be located between the first end spacer and a first cell set end, or between the second end spacer and a second cell set end.

According to an example embodiment, the first end spacer and second end spacer comprise an elastic pad. The elastic pad is for example, a soft foam pad made of polyurethane (PU) or polyethylene (PE). The elastic pads may provide cell swelling space between the battery cell set ends and the first and second end spacer during the lifetime of the battery cells, make cell stacks compressible and allow space for tolerance management when assembling the cell stacks into the housing. The elastic pads may cover at least partly at least one surface of the first or the second end spacer. The elastic pads may have at least one at least partly adhesive surface to adhere the elastic pad to the first or second end spacer and/or to the battery cell.

The at least one end spacer may be configured to acts as an adapter to guide the cell stack when the cell stack is configured to be inserted into the housing.

According to an example embodiment, the at least one end spacer comprises one or more elastic stripes.

To help understand different aspects and directions of the cell stack an X axis may be defined as extending through the length of the cell stack, a Z axis may be defined as extending through the height of the cell stack (transverse to the length in a first direction), and a Y axis may be defined as extending through a width of the cell stack (transverse to the length and the height).

The cell stack may further comprise a spacer system configured to support the plurality of battery cells. The first and second end spacer may be connected to the spacer system. The spacer system may comprise at least one guide member. The first and second end spacer may be connected to the at least one guide member of the spacer system. The spacer system may comprise at least one side spacer or cell spacer. The at least one side spacer or cell spacer may comprise one or more guide members configured to support and stiffen the cell stack when compressed. According to an example embodiment, when the cell stack is compressed to its shortest position, guide member movement is configured to be locked in the directions of the X, Y, and Z axis. When the cell stack is not compressed to its shortest position, cell stack movement is configured to be allowed in the direction of the X axis. Therefore, the cell stack is flexible, it may be lengthwise compressible, and move lengthwise back and forth in the direction of the X axis. Thus, the cell stack may be compressed smaller than the housing structure dimension and it may also be released from the compression to allow the cell stack to move lengthwise direction. When the cell stack is compressed to its shortest position, it may not move lengthwise, thus forming a stick structure wherein the guide member may be locked to any direction i.e. the X, Y, and Z axis direction. When the cell stack is not compressed to its shortest position for example when the cell stack is piled up or assembled, the cell stack may move to the X axis direction, i.e. lengthwise direction, but be locked in the other directions i.e. direction of the Y, and Z axis. The first end spacer and the second end spacer may be compressed towards each other to allow compression of the cell stack when the cell stack is configured to be inserted into the battery pack. The guiding member of first and second end spacer may be slidably or non-slidably attached to the guide member of a cell spacer or at least one side spacer.

According to an example embodiment, the one or more guide members comprising a contact surface, a protrusion, or a cavity. The contact surface may be a flat surface or it may have small protrusions, bumps, or patterns to prevent the contact surfaces from moving relative to each other. When the cell stack is compressed the contact surfaces of the guide members may be compressed together. Compression of the end spacers and contact between the contact surfaces may form support that may be enough to keep the cell stack together during the lifting and installation. When the cell stack is compressed to its shortest position, contact surfaces movement is configured to be locked in the directions of the X, Y, and Z axis.

The spacer system may further be configured to acts as an adapter to guide the cell stack when the cell stack is configured to be inserted into the housing. The adapter may help for fitting the cell stack into the shape of the battery pack housing, thus fit together the shape of the die cast housing interior and the battery cells. The adapter may fit and support the battery cells when they are located inside the housing. Thus, the adapter may keep the battery cell in place in the housing and support against vibration and shocks. The at least one adapter may be located on the at least one side of the at least one cell spacer or side spacer. The at least one adapter may form a protruding shape.

According to an example embodiment, the spacer system comprises one or more elastic stripes. The elastic stripes may be located on the at least one side of the at least one cell spacer or side spacer. According to an example embodiment, the housing comprises one or more elastic stripes to help installing of the cell stack into the housing and tolerance control in the battery pack housing.

According to an example embodiment, the spacer system comprising one or more cell spacers disposed between the plurality of battery cells. The cell spacers may be used between at least two battery cells of the cell stack to separate the battery cells from each other. They may also attach the battery cells to each other and support the cell stack structure when lifting and mounting. The cell spacer material is for example plastic.

The cell spacer may comprise two large cell spacer sides located opposite side of the cell spacer, two small cell spacer end sides, a top, and a bottom cell spacer side. The cell spacer may be thin, which means that the width of the cell spacer end side is smaller than the width of the cell spacer side. The cell spacer may cover at least partly the side face of the battery cell. According to an example embodiment, the cell spacer covers at least partly the side face and at least one of the end faces of the battery cell. The upper parts of the cell spacer may comprise at least one protrusion that extend beyond the top face of the battery cell. Thus, the protrusions of the upper part of the cell spacer may facilitate installation of bus bars for example, when terminals are small.

According to an example embodiment, an elastic pad is interposed between the battery cells and cell spacers as a separate elastic pad. According to an example embodiment, the cell spacer may comprise an elastic pad. When the cell spacer comprise the elastic pad the separate elastic pad is not needed. The elastic pad may be made of a flexible material that may have both a heat insulating property and restoring force such that it may deform when being pressed by each of the battery cells and recovers an original shape of the elastic pad. The elastic pads are for example, soft, foam pads made of polyurethane (PU) or polyethylene (PE). They may make cell stacks compressible and allow space for tolerance management when assembling the cell stacks into the housing. The elastic pads may cover at least partly at least one cell spacer side. The elastic pads may have at least one at least partly adhesive surface to adhere the elastic pad to the cell spacer and/or the battery cells to the cell spacer. The elastic pads may be attached to both sides of the cell spacer. The cell spacer may have at least one window or through hole wherein the elastic pad(s) may be attached. When the elastic pad may be attached to the cell spacer it may not be able to move during installation, thus making installation simpler and faster.

According to an example embodiment, the cell spacer may comprise one or more guide members. The one or more guide members may be located on one or both of the cell spacer end sides and/or on the bottom side. The guide member may allow the cell stack structure to be lengthwise compressible and/or may help to attach the cell spacers to each other when the cell stack is compressed. The guide member may make the cell stack also rigid when it compressed smaller than the housing structure dimension. According to an example embodiment, the guide member may comprise a contact surface, a protrusion, or a cavity. According to an example embodiment, the cell spacer may have two guide members on both of the cell spacer end sides. One of the guide members may comprise a protrusion guide and the other guide member may comprise a cavity guide. The protrusion guide may be located on the first edge of the cell spacer end side and the cavity guide may be located on the second edge of the cell spacer end side. The guide members may also comprise the cavity or protrusion guides. The two guide members may form a sliding lock, wherein the first guide member may comprise the protrusion or cavity guide and the second guide member may comprise the cavity or protrusion guide. When the protrusion guide may slide inside the cavity guide the sliding lock is locked in all directions. For example, the end spacer may have the cavity guide and the cell spacer may have the protrusion guide configured to form the sliding lock. The two guide members may also form a lock, wherein both of the guide members may comprise contact surfaces. When both of the contact surfaces are pressed against each other the lock is locked in all directions. These kind of locks may also be between two cell spacers.

When the battery cells may be stacked together the cell spacers and elastic pads may be provided between each of the plurality of battery cells. In addition to that, the end spacers and elastic pads may be provided at each end of the battery set. It may be possible to slidably attach the two cell spacers together by attaching or locking movable the cavity guide of the first cell spacer to the protrusion guide of the second cell spacer. The end spacers may also have at least one guide member. The at least one guide member of the end spacers may comprise a contact surface, a cavity guide, or protrusion guide to allow movable or non-movable attachment of the cell spacers to the end spacers.

According to an example embodiment, the first and second end spacer may comprise at least one guide member. According to an example embodiment, the guide members are configured to slidably attach or lock the cell spacer guide member to the other cell spacer guide member or to the first or second end spacer guide member. The guide members may be needed between the cell spacers and the first and second end spacers to guide and support the stack structure together and reduce cell stack hanging or bending downwards from middle when lifted.

The cell stack may comprise a cell set comprising a top cell set side, a bottom cell set side, a first cell set side, and a second cell set side. According to an example embodiment, the spacer system comprising one or more side spacers covering at least partly at least one side of the cell set. According to an example embodiment, the side spacer comprising at least one surface. The side spacers may support the cell stack structure when lifting and mounting and allow lengthwise movement of the cell stack.

According to an example embodiment, the one or more side spacers comprise one or more openings. The openings may facilitate fixing of the battery cell to the housing with attachment means for example, glue or thermally conductive glue. The openings may also help for cooling the battery cells.

According to an example embodiment, the one or more side spacers comprise one or more elastic stripes. The elastic stripes may help installing of the cell stack into the housing and tolerance control in the battery pack housing.

According to an example embodiment, a side spacer is covering at least partly the first cell set side, the second cell set side, and the bottom cell set side. The side spacer may make the cell stack more robust and stabile. The side spacer may comprise three surfaces: a first side surface, a second side surface, and a bottom surface. The first side surface may cover at least partly the first cell set side, the second side surface may cover at least partly the second cell set side, and the bottom surface may cover at least partly the bottom cell set side.

The one or more side spacers may comprise one or more guide members. According to an example embodiment, guide members are configured to lock or connect the side spacer to the first or second end spacer, or the other side spacer. The guide member may be needed between the at least one side spacers and the first and the second end spacers to guide and support the stack structure together and reduce cell stack bending downwards from middle when lifted.

According to an example embodiment, the side spacer may comprise one or more guide members. The guide member may comprise a contact surface, a protrusion, or a cavity. The one or more guide members may be located on at least one of the following: the first side surface, the second side surface, and/or the bottom surface.

According to an example embodiment, the side spacer may comprise two guide members on each of the at least one of the following: the first side surface, the second side surface, and/or the bottom surface. One guide members may comprise a protrusion guide and the other guide member may comprise a cavity guide. According to another example, both of the two guide members may comprise a contact surface, a cavity guide, or a protrusion guide. The guide members may be located on the first and second edge of the side spacer.

When the battery cells may be stacked together, the side spacers may cover at least partly the battery cell set from at least one cell set side. In addition to that, the end spacers may be provided at each end of the battery set. The cell set may comprise the battery cells and the elastic pad between each of the battery cells. It may be possible to slidably attach the two side spacers together by attaching or locking movable the cavity guide of the first side spacer to the second side spacer protrusion guide. The end spacers may also have at least one guide member. The at least one guide member of the end spacer may comprise a contact surface, a cavity guide, or protrusion guide to allow attachment of the side spacers to the end spacers.

According to an example embodiment, the spacer system comprising a first side spacer and a second side spacer, wherein the first side spacer is covering at least partly the first cell set side and the bottom cell set side; and the second side spacer is covering at least partly the second cell set side and the bottom cell set side. The first and second side spacer may comprise two surfaces. The first side spacer may comprise a first side surface, and a bottom surface. The second side spacer may comprise a second side surface, and a bottom surface.

The first and second side spacers may comprise one or more guide members. The guide member may be needed between the first and second spacer and the first and the second end spacers to guide and support the stack structure together and reduce cell stack bending downwards from middle when lifted.

According to an example embodiment, the first and second side spacers may comprise one or more guide members. The guide member may comprise a contact surface, a protrusion, or a cavity. The one or more guide members may be located on at least one of the following: the first side surface, the second side surface, and/or the bottom surface. When one guide member has a protrusion guide and the other guide member has a cavity guide, they may be attached together slidably.

According to an example embodiment, the first and second side spacer may have two guide members on each of the at least one of the following: the first side surface, the second side surface, and/or the bottom surface. One guide member may comprise a protrusion guide and the other guide member may comprise a cavity guide. According to another example, both of the two guide members may comprise a cavity guide or a protrusion guide. The guide members may be located on the first and second edge of the first and second side spacer.

When the battery cells may be stacked together the first and second side spacers may cover at least partly the battery cell set from one of the cell set sides and from the cell set bottom side. In addition to that, the end spacers and the elastic pads may be provided at each end of the battery set. It may be possible to slidably attach side spacers together by attaching or locking movable the cavity guide of the first side spacer to the second side spacer protrusion guide. The end spacers may also have at least one guide member. The at least one guide member of the end spacer or side spacer may comprise a contact surface, a cavity guide, or protrusion guide to allow attachment of the first and second side spacers to the end spacers.

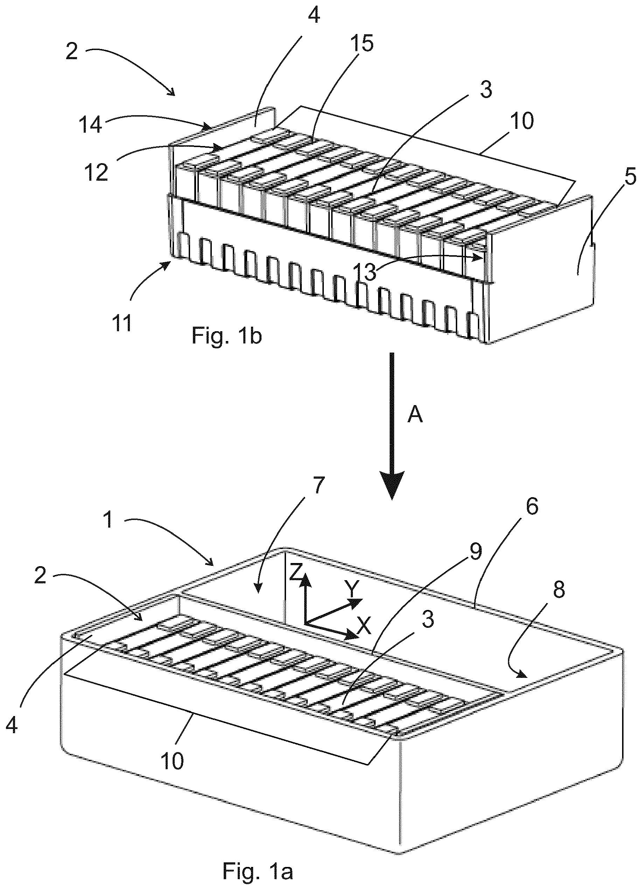

Fig. 1a is only showing some elements and functional entities, whose implementation may differ from what is shown. It is apparent to a person skilled in the art that the battery pack 1 may comprise also other functions and structures than those shown in Fig. 1a.

The embodiments are not, however, restricted to the battery pack 1 given as an example but a person skilled in the art may apply the solution to other packing systems provided with necessary properties.

Fig. 1a illustrates a schematic drawing of a battery pack 1 having one cell stack 2 assembled into the battery pack 2 in which examples of disclosed embodiments may be applied. According to an example embodiment, the battery pack 1 comprises a housing 6 comprising a first interior surface 7 and a second interior surface 8 opposite the first interior surface 7. The housing 6 may comprise one or more partition walls 9. The one or more partition walls may locate between the cell stacks 2. The housing 6 is for example, a rigid die cast housing made of aluminum. The housing 6 may control cell stack 2 dimensions and battery cell 3 internal swelling forces during the lifetime, support the cell stack 2 from ends and sides, and protect the battery cells from external forces. At least one cell stack 2 may be disposed within an interior space of the housing between the first and second interior surfaces 7,8. The cell stack 2 may comprise a plurality of battery cells 3 arranged in the cell stack 2 and forming a cell set 10. Fig. 1a example illustrates that one cell stack 2 has been assembled into the housing 6 and there is still room for another.

According to an example embodiment, the cell stack 2 comprises three axes, wherein an X axis is extending through the length of the cell stack, a Z axis is extending through the height of the cell stack, and a Y axis is extending through a width of the cell stack.

Fig. 1b illustrates a perspective view of a cell stack 2 which is ready to be assembled into the battery pack 1 of Fig. 1a according to an arrow A and in which examples of disclosed embodiments may be applied. According to an example embodiment, the cell stack 2 comprises a plurality of battery cells 3 arranged in the cell stack 2 and forming a cell set 10. The cell stack 2 may comprise a first end spacer 4 and a second end spacer 5, wherein the first end spacer 4 may be disposed to the first cell set end 12 and the second end spacer 5 may be disposed to the second cell set end 13. The end spacers 4,5 are made for example, from plastic. The upper part 14 of the end spacer may extend beyond the top face of the battery cell. The upper part of the end spacer 14 may comprise at least one protrusion or fin that extend beyond the top face of the battery cell 3. Thus, the upper parts 14 of the end spacers 4,5 may allow compression of the end spacers 4,5 and the whole cell stack 2 to allow it to be mounted into the battery pack 1. The cell stack may further comprise one or more elastic pads 15 between the battery cells 2. The elastic pads may be used between each battery cell 3 and between the cell set 10 and end spacers 4,5 to separate the battery cells 3 from each other and the end spacers 4,5. The spacer system 11 may also comprise at least one side spacer 21,22,32, or cell spacer 23.

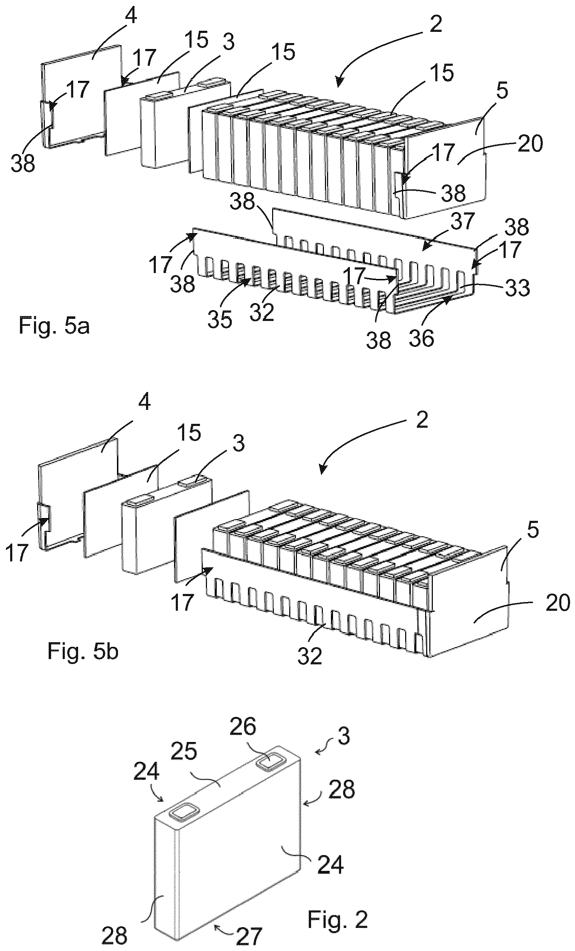

Fig. 2 illustrates a perspective view of a battery cell 3 in which examples of disclosed embodiments may be applied. The battery cell 3 may comprise six substantially flat faces each at a right angle to the neighboring faces. Two of the faces, termed side faces 24 may be larger than the rest of the faces. One of the smaller faces, top face 25 may comprise the battery cell terminals 26. The face opposite and parallel to the top face may be termed a bottom face 27. The bottom face 27 may be positioned towards a base portion of the housing 6. The bottom face may comprise glue, tape or other attachment means for fastening the battery cell 3 to the battery pack housing 6. The two remaining faces may be termed end faces 28.

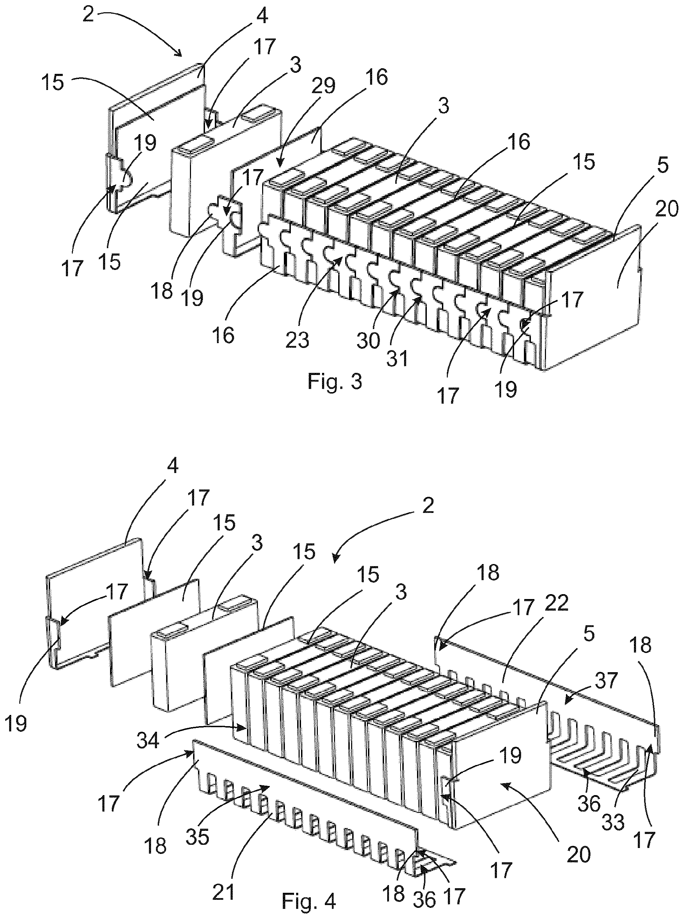

Fig. 3 illustrates an exploded perspective view of an embodiment of a cell stack 2 comprising cell spacers 16 in which examples of disclosed embodiments may be applied. According to an example embodiment, the cell stack 2 comprises a plurality of battery cells 3 arranged in the cell stack 2 and forming a cell set 10. The cell stack 2 may comprise a first end spacer 4 and a second end spacer 5, wherein the first end spacer 4 may be disposed to the first cell set end 12 and the second end spacer 5 may be disposed to the second cell set end 13. The cell stack 2 may further comprise one or more elastic pads 15 between the battery cells 2. The elastic pads may be used between each battery cell 3 and between the cell set 10 and end spacers 4,5 to separate the battery cells 3 from each other and the end spacers 4,5.

According to an example embodiment, the cell stack 2 comprising one or more cell spacers 16 disposed between the plurality of battery cells 3. The cell spacers 16 may be used between at least two battery cell 3 of the cell stack 2 to separate the battery cells 3 from each other. They may also attach the battery cells 3 to each other and support the cell stack 2 structure when lifting and mounting.

The cell spacer 16 may comprise two large cell spacer sides 29 located opposite side of the cell spacer 16, two small cell spacer end sides 23, a top, and a bottom cell spacer side. The cell spacer 16 may cover at least partly the side face 24 of the battery cell 3. According to an example embodiment, the cell spacer covers at least partly the side face 24 and at least partly at least one of the end faces 28 of the battery cell 3. The upper parts of the cell spacer 16 may comprise at least one protrusion that extend beyond the top face of the battery cell 3.

According to an example embodiment, an elastic pad 15 is interposed between the battery cells 3 and cell spacers 16. According to an example embodiment, the cell spacer 16 may comprise the elastic pad 15. The elastic pad 15 may cover at least partly at least one cell spacer 16 side. The elastic pads 15 may have at least one at least partly adhesive surface to adhere the elastic pad 15 to the cell spacer 16, and/or the battery cells 3. The elastic pads 15 may be attached to both sides of the cell spacer 16.

According to an example embodiment, the cell spacer 16 may comprise one or more guide members 17. The one or more guide members 17 may be located on one or both of the cell spacer end sides 23. The guide member 17 may allow the cell stack 2 to be lengthwise compressible and it may make the cell stack 2 rigid when it compressed smaller than the housing structure dimension.

According to an example embodiment, the guide member 17 may comprise a protrusion guide 18 or a cavity guide 19. According to an example embodiment, the cell spacer 16 may have two guide members 17 on both of the cell spacer end sides 23. One of the guide members 17 may comprise a protrusion guide 18 and the other guide member may comprise a cavity guide 19. The protrusion guide 18 may be located on the first edge 30 of the cell spacer end side 16 and the cavity guide 19 may be located on the second edge 31 of the cell spacer end side 23.

When the battery cells 3 may be stacked together the cell spacers 16 with elastic pads 15 may be provided between each of the plurality of battery cells 16. In addition to that, the end spacers 4, 5 and elastic pads 15 may be provided at each end of the battery set 10. It may be possible to slidably attach the two cell spacers 16 together by attaching or locking movable the protrusion guide 18 of the first cell spacer 16 to the cavity guide 19 of the second cell spacer 16. The end spacers 4, 5 may also have at least one guide member 17. The at least one guide member 17 may comprise a cavity guide 19 or protrusion guide 18 to allow movable attachment of the cell spacers 16 to the end spacers 4,5.

According to an example embodiment, the cell spacer 16 may further be configured to acts as an adapter to guide the cell stack 2 when the cell stack 2 is configured to be inserted into the housing 6.

According to an example embodiment, the first and second end spacers 4,5 comprise a sliding surface 20 configured to be set against the first and the second interior surfaces 7,8 of the housing, to let the sliding surface 20 to slide against the housing interior surface.

Fig. 4 illustrates an exploded perspective view of a cell stack 2 comprising two side spacers 21,22 in which examples of disclosed embodiments may be applied. According to an example embodiment, the spacer system 11 comprising a first side spacer 21 and a second side spacer 22, wherein the first side spacer 21 is covering at least partly the first cell set side 34 and the bottom cell set side; and the second side spacer 22 is covering at least partly the second cell set side 34 and the bottom cell set side. The first and second side spacer 21,22 may comprise two surfaces. The first side spacer 22 may comprise a first side surface 35, and a bottom surface 36. The second side spacer 22 may comprise a second side surface 37, and a bottom surface 36. The first side surface 35 may cover at least partly the first cell set side 34, the second side surface 33 may cover at least partly the second cell set side 34, and the bottom surface 36 may cover at least partly the bottom cell set side.

The first and second side spacers 21,22 may comprise one or more guide members 17. The guide member with sliding shape may be needed between at least one side spacer 21,22 and the first and the second end spacers 4,5 to guide and support the cell stack structure together and reduce cell stack 2 bending downwards from middle when lifted.

According to an example embodiment, the first and second side spacers 21,22 may comprise one or more guide members 17. The guide member may comprise a contact surface 38, a protrusion guide 18, or a cavity guide 19. The one or more guide members 17 may be located on at least one of the following: the first side surface 35, the second side surface 37, and/or the bottom surface 36.

According to an example embodiment, the first side spacer 21 may comprise two guide members 17 on the first side surface 35. According to an example embodiment, the second side spacer 22 may comprise two guide members 17 on the second side surface 37. According to an example embodiment, both of the two guide members 17 may comprise a protrusion guide 18. The protrusion guides 18 may be located on the first and second edges of the first and second side spacers 21,22.

When the battery cells 3 may be stacked together the first and second side spacers 21, 22 may cover at least partly the battery cell set from one of the cell set sides 34 and from the cell set bottom side. In addition to that, the end spacers 4,5 and elastic pads 15 may be provided at each end of the battery set 10. The end spacers 4,5 may also have at least one guide member 17. The at least one guide member 17 may comprise a cavity guide 19 to allow movable attachment of the first and second side spacers 21,22 to the end spacers 4,5.

According to an example embodiment, the side spacers 21,22 may further be configured to acts as an adapter to guide the cell stack 2 when the cell stack 2 is configured to be inserted into the housing 6.

According to an example embodiment, the first and second side spacers 21,22 comprise one or more openings 33. The openings are for example elongated and extend from the first side surface 35 or the second side surface 37 to the bottom surface 36. The openings 33 may facilitate fixing of the cell stack 2 to the housing 6 with attachment means for example, glue.

According to an example embodiment, the first and second end spacers 4,5 comprise a sliding surface 20 configured to be facing the first and the second interior surfaces 7,8 of the housing, to let the sliding surface 20 to slide against the housing interior surface.

Fig. 5a illustrates an exploded perspective view of a cell stack 2 comprising one side spacer 32 in which examples of disclosed embodiments may be applied. According to an example embodiment, a side spacer 32 is covering at least partly the first cell set side 34, the second cell set side 34, and the bottom cell set side. The side spacer 32 may make the cell stack 2 more robust and stabile. The side spacer 32 may comprise three surfaces: a first side surface 35, a second side surface 37, and a bottom surface 36. The first side surface 35 may cover at least partly the first cell set side 34, the second side surface 37 may cover at least partly the second cell set side 34, and the bottom surface 36 may cover at least partly the bottom cell set side.

According to an example embodiment, the side spacer 32 may comprise two guide members 17 on the first side surface 35 and two guide members 17 on the second side surface 37. All of the guide members 17 of the side spacer 32 may comprise a contact surface 38. The contact surfaces 38 may be located on the first and second edge of the side spacer side surfaces 35, 37. When the cell stack 2 may be compressed the contact surfaces 38 of the guide members 17 may be compressed together. Compression of the end spacers 4,5 and contact between the contact surfaces 38 may form support that may be enough to keep the cell stack 2 together during the lifting and installation.

Fig. 5b illustrates a perspective view of the cell stack 2 of Fig. 5a comprising one side spacer 32, wherein part of battery cells 3 has been assembled into the cell stack 2 and in which examples of disclosed embodiments may be applied. When the battery cells 3 may be stacked together the side spacer 32 may cover at least partly the battery cell set from three cell set side. In addition to that, the end spacers 4,5 may be provided at each end of the battery set 10. The battery set 10 may comprise the battery cells 3 and the elastic pads 15 between each of the battery cells 3. The end spacers 4,5 may also have two guide members 17 each. The guide member 17 may comprise a contact surface 38 to allow movable attachment of the side spacer 32 to the end spacers 4,5.

According to an example embodiment, the side spacer 32 comprise one or more openings 33. The openings are for example, elongated and extend from the first side surface 35 through the bottom surface 36 to the second side surface 37.

According to an example embodiment, the side spacer 32 may further be configured to acts as an adapter to guide the cell stack 2 when the cell stack 2 is configured to be inserted into the battery pack housing 6.

According to an example embodiment, the first and second end spacers 4,5 comprise a sliding surface 20 configured to be set against or facing the first and the second interior surfaces 7,8 of the housing, to let the sliding surface 20 to slide against the housing interior surface.

According to an example embodiment, the guide members 17 of Fig. 5a and 5b may comprise a cavity guide 19 or protrusion guide 18.

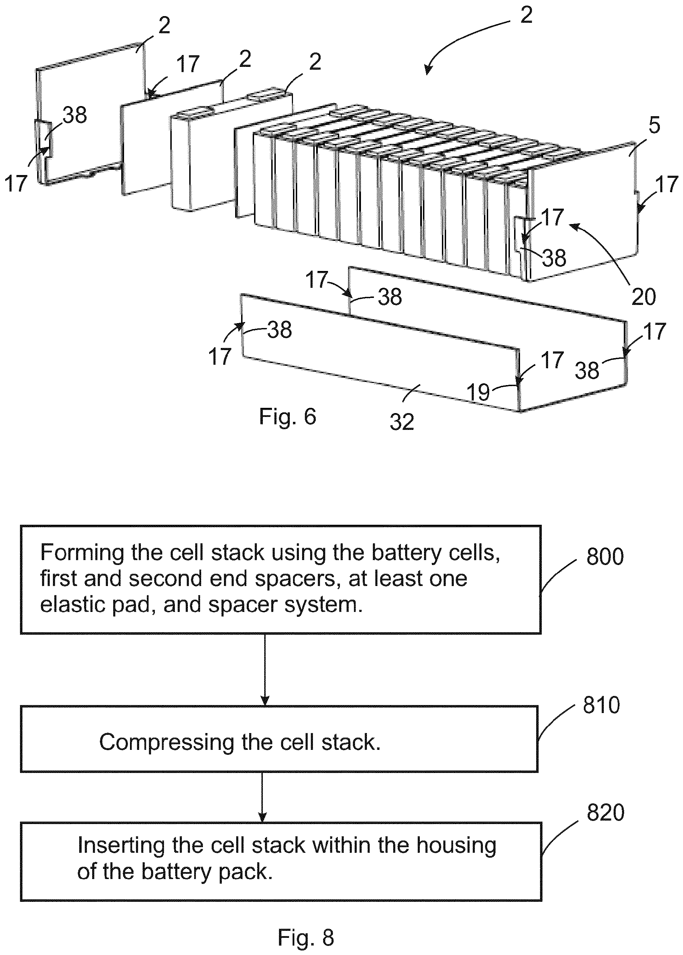

Fig. 6 illustrates an exploded perspective view of a cell stack 2 comprising one side spacer 32 in which examples of disclosed embodiments may be applied. The example of Fig. 6 shows a similar cell stack 2 as shown in Fig. 5a comprising a side spacer 32. The difference may be that the side spacer 32 does not have openings. Also, the end spacers 4,5 have protrusion guides 18 and the side spacer 32 have cavity guides 19.

According to an example embodiment, the guide members 17 of Fig. 6 comprise contact surfaces 38 instead of the protrusion guides 18 and the cavity guides 19.

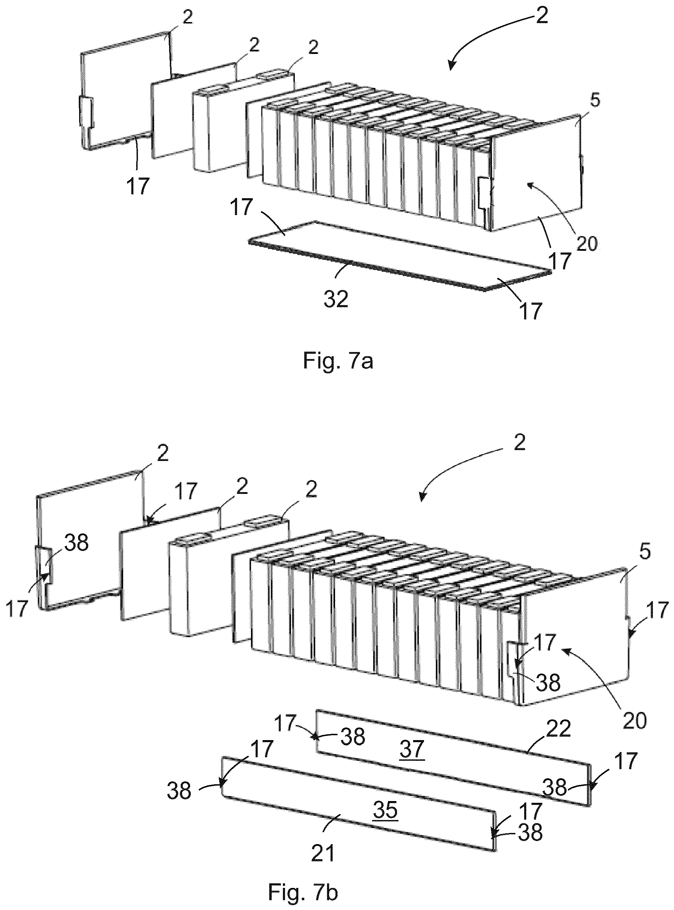

Fig. 7a illustrates an exploded perspective view of a cell stack 2 comprising one side spacer 32 in which examples of disclosed embodiments may be applied. According to an example embodiment, a side spacer 32 is covering at least partly the bottom cell set side. The side spacer 32 may comprise a bottom surface 36. The bottom surface 36 may cover at least partly the bottom cell set side.

According to an example embodiment, the side spacer 32 may comprise two guide members 17 on the bottom surface 36. All of the guide members 17 of the side spacer 32 may comprise a cavity guide 19. The cavity guides 19 may be located on the first and second edge of the bottom surface 36.

When the battery cells 3 may be stacked together the side spacer 32 may cover at least partly the battery cell set from the bottom cell set side. In addition to that, the end spacers 4,5 may be provided at each end of the battery set 10. The battery set 10 may comprise the battery cells 3 and the elastic pads 15 between each of the battery cells 3. The end spacers 4,5 may also have two guide members 17 each. The guide member 17 may comprise a protrusion guide 18 to allow movable attachment of the side spacer 32 to the end spacers 4,5.

According to an example embodiment, the guide members 17 of Fig. 7a comprise contact surfaces 38 instead of the protrusion guides 18 and the cavity guides 19.

According to an example embodiment, the side spacer 32 may further be configured to acts as an adapter to guide the cell stack 2 when the cell stack 2 is configured to be inserted into the battery pack housing 6.

According to an example embodiment, the first and second end spacers 4,5 comprise a sliding surface 20 configured to be set against or facing the first and the second interior surfaces 7,8 of the housing, to let the sliding surface 20 to slide against the housing interior surface.

Fig. 7b illustrates an exploded perspective view of a cell stack 2 comprising two side spacers 21,22 in which examples of disclosed embodiments may be applied. According to an example embodiment, the spacer system 11 comprising a first side spacer 21 and a second side spacer 22, wherein the first side spacer 21 is covering at least partly the first cell set side 34; and the second side spacer 22 is covering at least partly the second cell set side 34. The first and second side spacer 21,22 may comprise one side surface 35,37. The first side spacer 22 may comprise a first side surface 35. The second side spacer 22 may comprise a second side surface 37. The first side surface 35 may cover at least partly the first cell set side 34 and the second side surface 33 may cover at least partly the second cell set side 34.

The first and second side spacers 21,22 may comprise one or more guide members 17. The guide member with sliding shape may be needed between at least one side spacer 21,22 and the first and the second end spacers 4,5 to guide and support the cell stack structure together and reduce cell stack 2 bending downwards from middle when lifted.

According to an example embodiment, the first and second side spacers 21,22 may comprise one or more guide members 17. The guide member may comprise a protrusion or a cavity guide 18,19. The one or more guide members 17 may be located on the first side surface 35 and the second side surface 37.

According to an example embodiment, the first side spacer 21 may comprise two guide members 17 on the first side surface 35. According to an example embodiment, the second side spacer 22 may comprise two guide members 17 on the second side surface 37. According to an example embodiment, both of the two guide members 17 may comprise a cavity guide 19. The cavity guides 19 may be located on the first and second edges of the first and second side spacers 21,22.

When the battery cells 3 may be stacked together the first and second side spacers 21, 22 may cover at least partly the battery cell set from one of the cell set sides 34. In addition to that, the end spacers 4,5 and elastic pads 15 may be provided at each end of the battery set 10. The end spacers 4,5 may also have at least one guide member 17. The at least one guide member 17 may comprise a protrusion guide 18 to allow movable attachment of the first and second side spacers 21,22 to the end spacers 4,5.

According to an example embodiment, the guide members 17 of Fig. 7b comprise contact surfaces 38 instead of the protrusion guides 18 and the cavity guides 19.

According to an example embodiment, the side spacers 21,22 may further be configured to acts as an adapter to guide the cell stack 2 when the cell stack 2 is configured to be inserted into the housing 6.

According to an example embodiment, the first and second end spacers 4,5 comprise a sliding surface 20 configured to be facing the first and the second interior surfaces 7,8 of the housing, to let the sliding surface 20 to slide against the housing interior surface.

Fig. 8 illustrates an example of a method for assembling a battery pack 1, according to an example embodiment. The battery pack may comprise: a housing 5 comprising a first interior surface 7 and a second interior surface 8 opposite the first interior surface 7, a cell stack 2 disposed within an interior space of the housing 6 between the first and second interior surfaces 7,8. The cell stack 2 may comprise: a plurality of battery cells 3 arranged in the cell stack 2 and forming a cell set 10, at least one elastic pad 15 between the plurality of battery cells 3, a spacer system 11 configured to support the plurality of battery cells 3. The cell stack 2 may further comprise: a first end spacer 4 and a second end spacer 5, wherein the first end spacer 4 and second end spacer 5 are configured to be compressed towards each other to allow compression of the cell set 10 when the cell stack 2 is configured to be inserted into the battery pack 1, and one or more guide members 17 configured to support and stiffen the cell stack 2 when compressed, and wherein the housing 6 is configured to receive and withstand swelling and expansion forces of the battery cells 3.

At operation 800, the method may comprise forming the cell stack 2 using the battery cells, first and second end spacers 4,5, the at least one elastic pad 15, and spacer system 11.

At operation 810, the method may comprise compressing the cell stack 2.

At operation 820, the method may comprise inserting the cell stack 2 within the housing 6 of the battery pack 1.

According to an example embodiment, the cell stack 2 is installed slightly compressed down into the housing 6. The cell stack may first be installed for example, 1/3 of the height of the housing. The cell stack 2 may fill the entire length between the interior walls 7,8 of the housing. This means that the cell stack 2 may be installed as compressed. The upper parts of the end spacers 14 may still be held, but also the compression may be released. The cell stack 2 may stay in place due to forces of the spacer system 11. The spacer system 11 may help to keep the cell stack 2 in shape because the cell stack 2 does not hang too much in the middle. Once the cell stack 2 has been released with a compression tool, the next operation may be to press the cell stack 2 down into place as the first and second end spacer 4,5 slide rest of the distance against the interior walls 7,8 of the housing 6.

Further features of the method directly result for example from the functionalities and parameters of the battery pack 1 and cell stack 2 as described in the appended claims and throughout the specification and are therefore not repeated here. Different variations of the methods may be also applied, as described in connection with the various example embodiments.

A battery pack may be configured to perform or cause performance of any aspect of the methods described herein.

Any range or value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. A battery pack, comprising:
a housing comprising a first interior surface and a second interior surface opposite the first interior surface;
a cell stack disposed within an interior space of the housing between the first and second interior surfaces, wherein the cell stack, comprising:
a plurality of battery cells arranged in the cell stack and forming a cell set;
at least one elastic pad between the plurality of battery cells; and
a first end spacer and a second end spacer, wherein the first end spacer and the second end spacer are configured to be compressed towards each other to allow compression of the cell set when the cell stack is configured to be inserted into the housing;
a spacer system configured to support the plurality of battery cells, wherein the spacer system comprising one or more guide members configured to support and stiffen the cell stack when compressed; and wherein
the housing is configured to limit expansion of the cell stack and withstand swelling forces of the plurality of battery cells.

2. The battery pack according to claim 1, wherein
an X axis of the cell stack is extending through the length of the cell stack, a Z axis is extending through the height of the cell stack, and a Y axis is extending through a width of the cell stack; and
when the cell stack is compressed to its shortest position, guide member is configured to take contact and support the cell stack in X, Y, and Z axis directions.

3. The battery pack according to claim 1 or claim 2, wherein the first end spacer and the second end spacer comprise a sliding surface configured to be set against the interior surfaces of the housing when the cell stack is configured to be inserted into the battery pack.

4. The battery pack according to any of claims 1 to 3, wherein the spacer system is configured to acts as an adapter to guide the cell stack when the cell stack is configured to be inserted into the housing.

5. The battery pack according to any of claims 1 to 4, wherein an elastic pad is configured to be located
between the first end spacer and a first cell set end; and/or
between the second end spacer and a second cell set end.

6. The battery pack according to any of claims 1 to 5, wherein the spacer system comprising at least one side spacer or cell spacer.

7. The battery pack according to claim 6, wherein the spacer system comprising one or more cell spacers disposed between the plurality of battery cells.

8. The battery pack according to claim 7, wherein the guide members are configured to attach or connect the cell spacer
to the other cell spacer; and/or
to the first or second end spacer.

9. The battery pack according to claims 6, wherein
the cell set further comprising a bottom cell set side, a first cell set side, and a second cell set side; and
the spacer system comprising one or more side spacers covering at least partly at least one side of the cell set.

10. The battery pack according to claim 9, wherein the guide members are configured to connect the side spacers to
the first or second end spacer; and/or
the other side spacer.

11. The battery pack according to claim 9 or claim 10, wherein the side spacer is covering at least partly at least one of the following: the first cell set side, the second cell set side, and/or the bottom cell set side.

12. The battery pack according to claim 9 or claim 10, wherein
the spacer system comprising a first side spacer and a second side spacer, wherein
the first side spacer is covering at least partly the first cell set side and/or the bottom cell set side; and
the second side spacer is covering at least partly the second cell set side and/or the bottom cell set side.

13. The battery pack according to any of claims 9 to 12, wherein the one or more side spacers comprise one or more openings.

14. The battery pack according to any of claims 1 to 13, wherein the spacer system comprises one or more elastic stripes facing towards the housing interior surfaces.

15. A method of assembling a battery pack, wherein the battery pack, comprising:
a housing comprising a first interior surface and a second interior surface opposite the first interior surface;
a cell stack disposed within an interior space of the housing between the first and second interior surfaces, wherein the cell stack, comprising:
a plurality of battery cells arranged in the cell stack and forming a cell set;
at least one elastic pad between the plurality of battery cells;
a first end spacer and a second end spacer, wherein the first end spacer and the second end spacer are configured to be compressed towards each other to allow compression of the cell set when the cell stack is configured to be inserted into the housing; and
a spacer system configured to support the plurality of battery cells, wherein the spacer system comprising one or more guide members configured to support and stiffen the cell stack when compressed; and wherein
the housing is configured to limit expansion of the cell stack and withstand swelling forces of the plurality of battery cells, wherein the method comprising:
forming the cell stack using the battery cells, first and second end spacers, at least one elastic pad, and spacer system;
compressing the cell stack; and
inserting the cell stack within the housing of the battery pack.
